# DEMANDE DE BREVET EUROPEEN

(11) **EP 0 690 102 A1**
(43) Date de publication de la demande: **03.01.1996**
(21) Numéro de dépôt: 95401586.3
(22) Date de dépôt: 30.06.1995
(51) Int. Cl.: C08L 95/00

(54) **Liants organiques thermofusibles pour produits asphaltiques, produits asphaltiques correspondants et utilisations de ces liants**

(30) Priorité: 01.07.1994 FR 9408190
(71) Demandeur: SMAC ACIEROID, F-78062 Saint Quentin en Yvelines Cédex (FR)
(72) Inventeur: Beritzki, Jeannot, F-94400 Vitry (FR); Netter, Michel, F-75009 Paris (FR); Ovaert, Francis, F-75014 Paris (FR)
(74) Mandataire: Jacobson, Claude

(57) **Abrégé**

Ce liant organique thermofusible à base de bitume naturel, de bitume de l'industrie pétrolière, notamment de bitume pigmentable, ou de liant clair, contient en outre une cire d'hydrocarbure.

Application à la réalisation de produits asphaltiques pour revêtements d'étanchéité, de voirie ou de sols sportifs ou industriels; pour la stabilisation des enrochements, notamment sur des berges; pour la fabrication d'éléments de façade ou de sol insonorisants; et pour l'enrobage des déchets ultimes de l'industrie au cours d'un processus d'inertage desdits déchets.

## Description

La présente invention concerne un liant organique thermofusible qui permet de préparer des produits asphaltiques, et notamment de l'asphalte coulé, à des températures de fabrication et de mise en oeuvre relativement peu élevées, ou pour des températures de fabrication et de mise en oeuvre habituelles, de conférer au produit final des propriétés avantageuses de résistance sous charge statique ou dynamique, de tenue au refroidissement et de stabilité dimensionnelle à l'échauffement.

Par "produit asphaltique", dans la présente description, on entend un mélange coulable à chaud de liant organique thermofusible de type bitumineux avec une charge minérale.

Un produit asphaltique bien connu auquel l'invention peut s'appliquer est l'asphalte coulé, qui est un mélange réalisé à chaud généralement de bitume et de charges minérales, qui peuvent être de la poudre d'asphalte, le mélange étant coulable à chaud et durcissant par simple refroidissement pour procurer divers types de revêtements.

Les charges minérales comprennent des fines, à savoir des particules de dimensions inférieures à 0,08 mm, et éventuellement des agrégats, à savoir du sable, c'est-à-dire des particules de dimensions comprises entre 0,08 et 2 mm, et éventuellement des gravillons, c'est-à-dire des particules de dimensions supérieures à 2 mm et généralement comprises entre 2 et 15 mm.

Un liant organique thermofusible de type bitumineux pour produit asphaltique peut être du bitume naturel ou du bitume de l'industrie pétrolière, mais aussi ce qu'on appelle des liants clairs.

Les bitumes de l'industrie pétrolière sont issus du raffinage du pétrole, dont on extrait par distillation les parties lourdes, constituées d'huiles visqueuses et de teinte noire. Ces fractions de distillation peuvent être traitées, en particulier pour en éliminer les asphaltènes et obtenir des bitumes moins noirs. Ces derniers sont appelés des "bitumes pigmentables" car ils peuvent être colorés en y ajoutant divers pigments.

Par l'expression "liants clairs", on désigne des mélanges clairs d'huiles et de résines ou d'huiles claires et d'élastomères, substituables au bitume dans les asphaltes coulés. Ils permettent d'obtenir, avec l'utilisation de pigments adaptés, des asphaltes coulés de colorations variées. Les liants clairs sont encore plus sensibles que les bitumes à la dégradation par la chaleur et dégagent, à chaud, une odeur très désagréable. Ces liants clairs présentent le même caractère thermofusible que les bitumes "classiques".

Le liant peut contenir en outre divers additifs tels que des polymères.

La préparation d'un produit asphaltique tel que l'asphalte coulé comprend le mélange du liant et des charges à une température dite "de fabrication", puis le coulage de ce mélange à une température de mise en oeuvre, et enfin le refroidissement du mélange coulé.

En général, ces températures sont comprises entre 200 et 270°C selon les compositions et sont d'autant plus élevées que l'on recherche un asphalte dur après refroidissement. Ces températures élevées présentent toutefois l'inconvénient de dégrader les liants organiques et d'entraîner la production de fumées et d'odeurs désagréables.

L'asphalte présente par ailleurs d'autres inconvénients liés au manque de stabilité du revêtement coulé, après refroidissement.

Par exemple, l'asphalte présente un fort caractère thermoplastique, ce qui entraîne l'apparition d'empreintes sous charge statique, dans le cas de revêtement de trottoirs ou de parkings, ou d'orniérage sous circulation. Ce phénomène est également très sensible à la température car la "dureté" de l'asphalte diminue beaucoup avec l'élévation de la température ambiante.

L'asphalte est en outre sensible aux variations de température.

A température élevée, en été, l'asphalte a tendance soit à s'écouler, ce qui entraîne des désordres par répétition des cycles chaud-froid, soit à libérer ses contraintes internes par retrait, entraînant une fissuration. Ce comportement sera qualifié par la suite de faible stabilité dimensionnelle.

De même, au cours des refroidissements initial et hivernaux, l'asphalte coulé a tendance à faire du retrait. Dans la majorité des situations, ce retrait est entravé, ce qui engendre la création de contraintes internes pouvant entraîner une rupture aux points de faiblesse. Pour caractériser ce comportement, on parlera de tenue au refroidissement.

Pour pallier ces différents inconvénients, des additifs sont couramment utilisés pour modifier le liant organique.

Comme liants modifiés, on connaît des bitumes durcisseurs (ou des bitumes plus durs), qui améliorent la résistance sous charge statique ou dynamique et la stabilité dimensionnelle du revêtement asphaltique, mais aggravent les risques de retrait et de fissuration à froid et diminuent la maniabilité de l'asphalte, à savoir son aptitude à s'étaler facilement à la température de mise en oeuvre.

Des polymères de masse moléculaire moyenne à élevée (20 000 à 1 000 000 et plus) peuvent également être ajoutés au bitume pour produire des asphaltes résistant aux charges et présentant une bonne stabilité dimensionnelle, mais cela se fait au détriment de la maniabilité, le revêtement devant donc être coulé à des températures élevées auxquelles les polymères sont dégradables et sont parfois proches de l'autoinflammation.

Pour améliorer la maniabilité, on a employé des résines d'hydrocarbures de bas poids moléculaire (200 à 2 000), qui sont des polymères insaturés provenant du pétrole tels que des polymères coumarone-indène, qui présentent l'inconvénient de générer de mauvaises odeurs à chaud. La tenue au refroidissement de l'asphalte est défavorisée en raison de la température de transition vitreuse (Tg) élevée et de la bonne solubilité des polymères dans le bitume. Le bitume est en effet rendu plus dur, ce qui favorise le retrait à froid et donc augmente la fragilité à froid. Pour éviter le retrait à froid, il est au contraire avantageux que l'additif ne soit pas ou peu soluble dans le bitume et précipite lors du refroidissement pour former un réseau de fibres de façon à "armer" le revêtement coulé.

On connaît par exemple l'utilisation d'élastomères, notamment de caoutchouc naturel ou de copolymères styrène-butadiène-styrène (SBS) ou styrène-isoprènestyrène (SIS), qui réduisent le retrait à froid et améliorent la stabilité dimensionnelle, mais ces polymères imposent des températures de mise en oeuvre élevées pour avoir une bonne maniabilité, ce qui est d'autant plus gênant qu'ils sont eux-mêmes sensibles à ces hautes températures. Les revêtements obtenus ne sont en outre pas suffisamment résistants aux charges statiques ou dynamiques.

Les additifs connus permettent ainsi d'améliorer certaines des propriétés principalement recherchées des asphaltes coulés, mais cela se fait toujours au détriment d'au moins une autre de ces propriétés. Le besoin de trouver d'autres additifs plus avantageux persiste donc pour produire des asphaltes aux propriétés améliorées. Ainsi, si l'on pouvait disposer d'un additif associant les propriétés d'un polymère (aux températures d'utilisation) à celles des résines d'hydrocarbure (aux températures de fabrication et de mise en oeuvre), et si en outre cet additif était insoluble dans le liant et précipitait aux températures inférieures à son point de fusion pour développer dans l'asphalte une structure armant l'asphalte, la majeure partie des inconvénients de l'asphalte coulé serait éliminé.

L'invention a donc pour but de fournir un liant organique qui permette d'éviter les inconvénients exposés précédemment.

Ce but, ainsi que d'autres qui apparaîtront par la suite, est atteint en utilisant en tant qu'additif du liant organique une cire d'hydrocarbure.

Certains bitumes de distillation dits "bruts paraffiniques" contiennent naturellement des cires de paraffines. Toutefois, ces bitumes voient leur plasticité réduite du fait de la présence de ces cires. Ainsi, le brevet US 3 303 149 propose d'incorporer un copolymère d'éthylène et d'ester vinylique dans ces bitumes pour contrecarrer l'effet néfaste des cires.

Le brevet US 3 265 517 décrit des produits dérivés d'asphaltènes par couplage notamment avec des cires hydrocarbonées, utilisables dans des compositions de moulage ou de revêtement. Ces produits sont obtenus par réaction chimique entre des asphaltènes préalablement chlorés et des cires d'hydrocarbures.

D'autres cires modifiées ont également été utilisées selon le document WO-A-87 05 313 comme émulsifiant dans des compositions comprenant une phase de résine de polyoléfine dispersée dans une phase continue de bitume. Ces cires fonctionnalisées en bout de chaîne, en particulier par un groupe acide carboxylique terminal, sont compatibles à la fois avec la phase de bitume et avec la phase de résine polyoléfine.

La présente invention procure une association nouvelle de cires et de liants bitumineux pour fournir un liant organique aux propriétés améliorées par une cire d'hydrocarbure précipitant dans ce liant.

A cet effet, l'invention a pour objet un liant organique thermofusible pour produit asphaltique, ce liant étant à base de bitume naturel ou de bitume de l'industrie pétrolière, notamment de bitume pigmentable ou de liant clair, caractérisé en ce qu'il contient, outre ce produit de base, un additif constitué par une cire d'hydrocarbure dont le point de fusion, mesuré suivant les normes ASTM D 3945 et D 3418, est supérieur à 85°C.

On appelle "cires d'hydrocarbures" des hydrocarbures polymères saturés de bas poids moléculaire, d'aspect caractéristique, solides à la température ambiante, à point de fusion assez franc et de faible viscosité. Leur apparence est translucide à opaque mais jamais vitreuse. Ces polymères diffèrent ainsi dans leurs propriétés des polymères et élastomères couramment employés, qui présentent une zone de ramollissement assez large et vont graduellement de l'état solide à l'état liquide lorsque leur température s'élève. Par ailleurs, les cires sont insolubles dans le bitume et les liants clairs à la température d'utilisation.

Par "bas poids moléculaire", on entend un poids moléculaire inférieur à environ 6 000.

Les cires utilisées selon l'invention sont de préférence des cires de polyoléfines et notamment de polyméthylène, de polyéthylène, de polypropylène ou de copolymère éthylène-propylène.

Ainsi, une cire de polyéthylène utilisable selon l'invention est un polymère de polyéthylène de bas poids moléculaire compris généralement entre 500 et 6 000.

De manière avantageuse, ladite cire d'hydrocarbure a une pénétration, mesurée à 23°C suivant la norme ASTM D1321, inférieure à 15/10 mm.

Le liant selon l'invention peut contenir en outre un élastomère, séquencé ou non, notamment un copolymère SBS ou SIS, ou bien un élastomère de type SBR (élastomère styrène-butadiène).

L'invention a également pour objet un procédé de préparation d'un liant organique thermofusible pour produit asphaltique tel que défini ci-dessus, dans lequel on ajoute à du bitume naturel ou à du bitume de l'industrie pétrolière ladite cire d'hydrocarbure.

L'invention a également pour objet un produit asphaltique coulable à chaud et durcissant par simple refroidissement, caractérisé en ce qu'il contient un liant thermofusible tel que décrit précédemment et des charges minérales, notamment des fines et éventuellement du sable et éventuellement des gravillons, ou bien des charges non minérales, comme notamment des grains de liège ou des granulats de caoutchouc, naturel ou non, neuf ou de récupération, donc des charges organiques naturelles ou artificielles.

Un produit asphaltique selon l'invention est préparé en mélangeant à chaud le liant thermofusible et les charges.

La présence de la cire d'hydrocarbure dans le liant organique selon l'invention améliore la coulabilité à chaud du mélange liant-charge, où la cire est fondue.

Ainsi, l'utilisation de liant thermofusible selon l'invention permet d'abaisser la température de fabrication et de mise en oeuvre des produits asphaltiques, en ayant une maniabilité satisfaisante, ou bien, à des températures de fabrication et de mise en oeuvre classiques, d'améliorer la maniabilité du produit.

Du fait de sa teneur en cire d'hydrocarbure, et de sa relativement faible température de fabrication, le produit asphaltique de l'invention peut contenir des produits sensibles à la chaleur tels que les charges non minérales mentionnées précédemment qui se dégradent lorsqu'ils sont incorporés dans des produits asphaltiques classiques.

Le liant de l'invention permet de diminuer le risque de dégradation de ces matières non minérales, en limitant, notamment dans le cas du caoutchouc, la production d'odeurs nauséabondes.

Lors du refroidissement du produit coulé, la cire insoluble dans l'autre composant du liant, à savoir un bitume ou un liant clair, forme un réseau de fibres qui constitue une sorte d'armature dans le produit refroidi.

Le produit asphaltique a donc une bonne résistance sous charge statique ou dynamique. Il manifeste également une bonne tenue au refroidissement, ainsi qu'à l'échauffement car le point de fusion des cires est de l'ordre de 110°C (cire de polyéthylène) à 140°C (cire de polypropylène), c'est-à-dire est nettement inférieur à la température de fabrication et de mise en oeuvre et nettement supérieur aux températures ambiantes les plus élevées.

Le produit asphaltique comprenant un liant selon l'invention additionné d'élastomère voit sa fragilité diminuée de manière avantageuse par rapport à un produit à base de liant classique.

Selon un mode de réalisation particulier de l'invention, le produit asphaltique contient de l'asphalte de récupération.

Par "asphalte de récupération", on entend des morceaux de revêtement d'asphalte usagés, qui peuvent être concassés. Cet asphalte de récupération peut être refondu à chaud avec un liant organique thermofusible selon l'invention, en ajoutant éventuellement d'autres charges. La masse asphaltique fondue peut être elle-même coulée à chaud et durcit par refroidissement comme un produit asphaltique classique.

Les produits asphaltiques selon l'invention peuvent être utilisés pour la réalisation de revêtements d'étanchéité ou de voirie, ou de sols industriels ou sportifs.

Les revêtements ainsi obtenus présentent une surface régulière, la cire conférant un caractère autolissant au produit asphaltique.

Les produits asphaltiques comprenant des charges non minérales, qui sont ordinairement douées de propriétés de compressibilité, de souplesse, ou de préférence de viscoélasticité, peuvent être utilisés pour la réalisation de sols atténuant la transmission sonore. L'excellente stabilité dimensionnelle de ces sols à la chaleur ou sous charge de longue durée confère à ces derniers une très bonne résistance.

Ces produits asphaltiques chargés de matières non minérales présentent d'intéressantes propriétés d'amortissement interne des vibrations. A cet égard, ils peuvent être utilisés comme matériau de scellement pour des éléments sujets aux vibrations, par exemple pour sceller au sol des rails de chemin de fer.

En particulier, les produits asphaltiques de l'invention peuvent aussi être utilisés pour étancher les galeries de mines de stockage de déchets, notamment de déchets radioactifs. Pour cette application, les produits asphaltiques selon l'invention sont très appropriés en raison de leur bonne stabilité thermique.

Une autre utilisation possible des produits asphaltiques selon l'invention concerne la stabilisation d'enrochements. Le produit fondu à chaud est coulé entre des pierres et est appelé dans ce cas précis "mastic d'enrochement". Par exemple, on assure ainsi l'étanchéité des berges. Les produits selon l'invention s'appliquent particulièrement à cette utilisation en raison de leur aptitude à couler à chaud de façon contrôlée et de leur bonne stabilité dimensionnelle sur une surface en pente.

Le liant organique thermofusible selon l'invention trouve également une utilisation dans le domaine du traitement des déchets ultimes ménagers ou industriels. Il peut être utilisé comme agent d'inertage de ces déchets ultimes, notamment de cendres d'incinération d'ordures ménagères ou de produits chimiques.

Ces déchets ultimes, qui sont le plus souvent des particules fines ou très fines, doivent être stockés et peuvent être préalablement enrobés par des agents d'inertage pour les isoler parfaitement de l'environnement extérieur et éviter en particulier le phénomène de lixiviation par les eaux de pluie. Toutefois, plus la charge est fine, plus l'agent d'enrobage est consommé en quantité importante.

Le liant de l'invention permet, grâce à sa bonne coulabilité à chaud, d'enrober parfaitement ces particules fines tout en utilisant une quantité modérée d'agent d'enrobage et en procurant, après refroidissement, une masse d'inertage rigide et pleine.

Un procédé d'inertage des déchets ultimes consiste à mélanger à chaud un liant organique selon l'invention avec lesdits déchets, et à couler et à laisser refroidir le mélange obtenu selon une forme appropriée. On obtient ainsi un matériau dur et plein, qui peut être stocké et dans lequel les particules de déchets sont parfaitement isolées de l'environnement extérieur.

Les exemples suivants illustrent l'invention.

Une partie des exemples concerne des asphaltes coulés préparés à partir d'un liant organique selon l'invention.

Ces asphaltes coulés et refroidis sont soumis à différents tests destinés à caractériser leurs propriétés.

On réalise des essais classiques d'indentation suivant la norme NFT 66-002 ou s'inspirant de cette dernière, par la mesure de l'enfoncement d'un poinçon dans l'asphalte, sous une charge, pour une durée et une température données, pour caractériser la dureté de l'asphalte coulé. Cet essai permet également de déterminer le facteur K qui caractérise le viscoélasticité du matériau, K valant O pour un corps élastique et K valant 1 pour un matériau purement visqueux.

On réalise également un test de flexion à froid dans lequel on mesure la température minimale à laquelle l'asphalte présente encore une possibilité d'allongement.

On réalise enfin un test de stabilité dimensionnelle pour caractériser la tenue à l'échauffement de l'asphalte coulé, dans lequel on mesure la température maximale à laquelle une éprouvette d'asphalte conserve sa forme et ses dimensions.

Pour définir ce critère, on note l'évolution d'une des dimensions horizontales de l'éprouvette mise en étuve pendant 24 h à une température donnée, température qui sera augmentée de 10°C en 10°C chaque jour. L'éprouvette subit soit un effondrement (fluage), soit un retrait plus ou moins important avant de s'effondrer, à la température qui sera désignée comme la température maximale de stabilité.

### Exemple 1

Dans cet exemple, on prépare un asphalte coulé de type normalisé "sablé étanchéité" (défini par le cahier des charges de l'Office des Asphaltes de France) qui contient en outre selon l'invention une cire de polyéthylène à raison de 1% du poids d'asphalte. Cette cire est commercialisée par la Société ESSO sous la marque ESCOMER^{(R)}.

On compare cet asphalte avec un asphalte ne différant que par l'absence de cire de polyéthylène, dans un test d'indentation.

Les résultats figurant dans le tableau I illustrent l'effet de la cire sur le caractère thermoplastique de l'asphalte.

**TABLEAU 1**

| ASPHALTE COULE TYPE "SABLE ETANCHEITE" | INDENTATION EN 1/10 de mm | |
|---|---|---|
| | Mesurée à 25°C | Mesurée à 40°C |
| Conforme aux règles professionnelles | 16 | 107 |
| A liant élastomère avec 1% de cire de polyéthylène (même % de liant total que ci-dessus) | 10 | 23 |

La présence de la cire de polyéthylène améliore sensiblement la résistance de l'asphalte coulé à l'indentation, encore plus significativement à la température de 40°C.

### Exemple 2

On prépare des asphaltes de type normalisé "coulé gravillonné" (défini dans le cahier des charges de l'Office des Asphaltes de France) comprenant 8,6% de liant total par rapport au poids de l'asphalte, en faisant varier la teneur en cire de polyéthylène.

Le liant est constitué d'un bitume pigmentable commercialisé par la Société TOTAL sous la marque PIGMENTAL^{(R)}. La cire utilisée dans cet exemple est la cire de polyéthylène commercialisée par la Société IGI.

Le tableau 2 présente les résultats de tests d'indentation réalisés sur ces asphaltes.

**TABLEAU 2**

| Bitume % | Cire de polyéthylène % du poids total d'asphalte | Indentation Mesurée à 40°C mesurée à 50°C | | Température d'application °C |
|---|---|---|---|---|
| 8,6 | 0 | 48 | 102 | 220°C |
| 8,4 | 0,2 | 40 | 81 | 210°C |
| 8 | 0,6 | 26 | 40 | 200°C |
| 7,6 | 1 | 12 | 16 | 200°C |

La cire de polyéthylène rend l'asphalte plus résistant à l'indentation qu'un asphalte classique, et ce, pour une température d'application inférieure.

### Exemple 3

On prépare des asphaltes coulés gravillonnés comprenant 8,6% de liant total par rapport au poids de l'asphalte. On compare les caractéristiques d'asphaltes dont le liant est constitué uniquement de bitume PIGMENTAL^{(R)}, dont le liant comprend une résine majoritairement aliphatique de marque ESCOREZ^{(R)} commercialisée par la Société ESSO, ou un polymère de polypropylène de poids moléculaire élevé, et dont le liant comprend la cire de polyéthylène de IGI.

Le tableau 3 rassemble les températures d'application, le résultat du test d'indentation, la valeur du coefficient K, la température du test de flexion à froid et la température maximale de stabilité pour chacune des compositions d'asphalte testées.

**TABLEAU 3**

| Liant | | Température d'application | Indentation en 1/10 mm | K | Température maximale de stabilité | Flexion à froid |
|---|---|---|---|---|---|---|
| Bitume 40/50 pigmentable % du poids d'asphalte | Additif % du poids d'asphalte | | | | | |
| 8,6 | sans | 220°C | 42 | 0,28 | 50°C | +5°C |
| 8,0 | sans | 230°C | 17 | 0,21 | | |
| 8,0 | 0,6 cire de polyéthylène | 200°C | 11 | 0,15 | 110°C | +5°C |
| 8,0 | 0,6 résine | 220°C | 39 | 0,28 | | |
| 8,2 | 0,4 polypropylène | 250°C | 8 | 0,13 | | |

Dans ce cas, l'utilisation de la cire de polyéthylène diminue la température d'application, durcit considérablement l'asphalte en le rendant plus élastique, et améliore sa stabilité dimensionnelle.

En particulier, les propriétés sont considérablement améliorées par rapport à un asphalte contenant une résine conventionnelle.

D'autre part, la cire de polyéthylène résout le problème rencontré avec le polymère de polypropylène résidant dans une température d'application très élevée (250°C).

Les mêmes mesures sont effectuées sur un asphalte similaire à base d'un bitume 40/50 non pigmentable commercialisé par la Société SHELL sous la marque MEXPHALT^{(R)} et donnent des résultats très satisfaisants, reportés dans le tableau 4.

**TABLEAU 4**

| Liant | | Température d'application | Indentation en 1/10 mm | K | Température maximale de stabilité | Flexion à froid |
|---|---|---|---|---|---|---|
| Bitume 40/50 non pigmentable % du poids d'asphalte | Additif % du poids d'asphalte | | | | | |
| 8,0 | 0,6 cire de polyéthylène | 230°C | 9 | non mesuré | 110°C | non mesurée |

Bien que la température nécessaire à la coulabilité de l'asphalte reste relativement élevée (230°C) par rapport à celle d'un asphalte à base de liant clair (qui peut être abaissée à 200°C), les propriétés mécaniques d'un asphalte à base de bitume non pigmentable selon l'invention sont tout à fait intéressantes et certaines, comme la résistance à la pénétration mesurée par l'indentation, atteignent un niveau encore jamais atteint dans les domaines des sols, notamment industriels, en asphalte.

Les exemples 4 et 5 illustrent ces propriétés.

### Exemples 4 et 5

Dans ces exemples, on prépare deux asphaltes à base de bitume non pigmentable, comprenant un mélange de bitume 25/35F commercialisé par la société NYNAS et de bitume H105/115 commercialisé par la société SHELL sous la marque MEXPHALT^{(R)}, de cire de polyéthylène (IGI) et de charges minérales comprenant des fines calcaires, du sable de Seine et des gravillons.

L'exemple C1 (non conforme à l'invention) présente à titre comparatif une composition d'asphalte similaire ne contenant pas de cire.

Dans les trois exemples 4,5 et C1, l'asphalte contient 9% en poids de liant (selon l'invention ou non) pour 91% en poids de charges.

Les compositions en asphalte sont indiquées dans le tableau 5 ci-après où les pourcentages sont en % du poids d'asphalte.

**TABLEAU 5**

| COMPOSITION | EX. 4 | EX. 5 | EX. C1 |
|---|---|---|---|
| Bitume 25/35 F | 4,6 % | 4,6 % | 5 % |
| Bitume Mexphalt®H 105/115 | 3,8 % | 3,8 % | 4 % |
| Cire de polyéthylène | 0,6 % | 0,6 % | 0 % |
| Fines | 26 % | 26 % | 26 % |
| Sables | 37 % | 25 % | 37 % |
| Gravillons | 28 % | 40 % | 28 % |

Ces asphaltes sont ensuite appliqués en tant que revêtements de sol. La résistance des revêtements est caractérisée par la mesure d'indentation à 40°C, par la valeur du facteur K dans un essai à 30°C sous 10 bars et par le temps nécessaire pour une déformation de 1 mm à 30°C sous 10 bar.

Les résultats sont reportés dans le tableau 6.

**TABLEAU 6**

| PROPRIETES | EX. 4 | EX. 5 | EX. C1 |
|---|---|---|---|
| Température d'application | 225°C | 220°C | 240°C |
| Mesure d'indentation en 1/10 de mm (à 40°C) | 22 | 28 | 31 |
| Facteur K | 0,17 | 0,17 | 0,22 |
| Temps nécessaire pour une déformation de 1 mm à 30°C sous 10 bars | 300 h. | 700 h. | 10 h. |

Les asphaltes des exemples 4 et 5 ont une température d'application bien plus faible que ceux de l'exemple C1, et leur résistance sous charge est bien meilleure.

Bien que légèrement plus pénétrable que celui de l'exemple 4, l'asphalte de l'exemple 5 présente une résistance sous charge d'une durée exceptionnellement longue.

### Exemple 6

On étudie cette fois les propriétés d'asphaltes sablés à base de bitume élastomère contenant 11% de liant total par rapport au poids d'asphalte. Comme bitumes élastomères, on utilise des mélanges de divers bitumes 40/50 et de SBS.

Le tableau 7 rassemble les résultats de tests comparatifs d'indentation, de stabilité dimensionnelle et de flexion à froid, entre des asphaltes contenant selon l'invention la cire de polyéthylène ESCOMER^{(R)} et des asphaltes contenant du bitume comme seul liant, ou bien contenant en outre la résine ESCOREZ^{(R)} ou une résine aromatique soluble dans le bitume de marque NORSOLENE^{(R)} commercialisée par la Société TOTAL.

Les températures d'application des asphaltes sont identiques pour toutes les compositions.

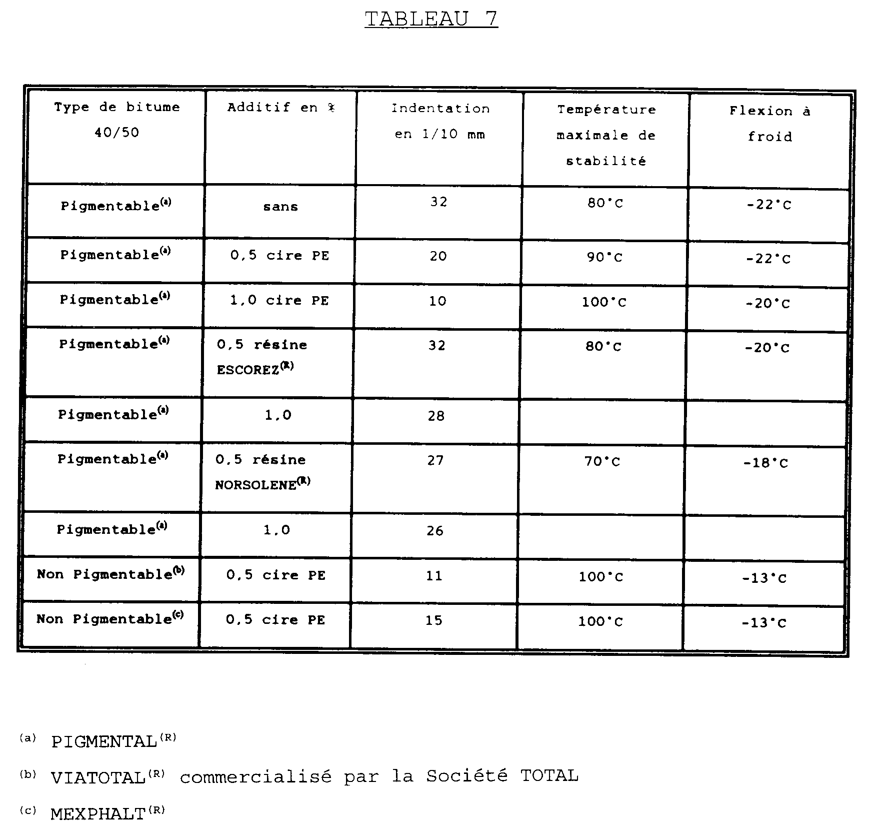

L'abréviation "PE" désigne le polyéthylène.

Dans ce cas, la cire de polyéthylène durcit considérablement l'asphalte et augmente la stabilité thermique. Par ailleurs, elle réduit la perte de tenue au refroidissement rencontrée avec les autres additifs utilisés.

### Exemple 7

Dans cet exemple, on prépare des asphaltes gravillonnés à base de liant clair contenant 8,8% de liant total par rapport au poids d'asphalte.

Des tests comparatifs d'indentation et de flexion à froid entre des asphaltes contenant la cire de polyéthylène de IGI et des asphaltes n'en contenant pas ont montré que la cire de polyéthylène durcit l'asphalte et limite le claquage à froid.

Le tableau 8 rassemble les résultats des tests comparatifs de stabilité dimensionnelle et les températures d'application pour deux liants clairs commerciaux à savoir le MEXPHALT C^{(R)} commercialisé par la Société SHELL et le LSC^{(R)} commercialisé par la Société TOTAL.

Le pourcentage accompagnant la valeur de la température maximale de stabilité pour le liant MEXPHALT C^{(R)} indique la valeur du rétrécissement de l'éprouvette d'asphalte après refroidissement.

**TABLEAU 8**

| Liant clair % du poids d'asphalte | Additif en % du poids d'asphalte | Température d'application | Température maximale de stabilité |
|---|---|---|---|
| MEXPHALT C 8,8% | sans | 230°C | 80°C : -0,7% |
| MEXPHALT C 8,2% | cire PE 0,6% | 200°C | 80°C : -0,3% |
| LSC 8,8% | sans | 230°C | 60°C |
| LSC 8,2% | cire PE 0,6% | 200°C | 110°C |

Dans ce cas encore, la cire de polyéthylène permet d'abaisser la température d'application en améliorant la stabilité à l'échauffement.

### Exemple 8

Dans ces exemples, on prépare un asphalte dit "acoustique" ayant des propriétés insonorisantes.

Cet asphalte contient 15,4% de liant et 84,6% de charge, dont 11,5% de poudrette de caoutchouc.

A titre comparatif, on prépare un asphalte C2 (non conforme à l'invention) ayant la même teneur en charge mais dont le liant ne contient pas de cire.

Les compositions des deux asphaltes sont présentées dans le tableau 9 ci-après, où les pourcentages sont en % du poids d'asphalte.
Exarol^{(R)} est une huile de pétrole commercialisée par la société TOTAL. Solprène^{(R)} est un élastomère styrènebutadiène commercialisé par la société ENICHEM.

**TABLEAU 9**

| COMPOSITION | EX. 8 | EX. C2 |
|---|---|---|
| Bitume Pigmental®40/50 | 11,5 % | 12,7 % |
| Exarol®50 | 1,5 % | 1,5 % |
| Solprène®1205 | 1,2 % | 1,2 % |
| Cire de polyéthylène | 1,2 % | 0 % |
| Sulfate de Baryum naturel broyé | 61,6 % | 61,6 % |
| Sable de Seine | 11,5 % | 11,5 % |
| Poudrette de caoutchouc | 11,5 % | 11,5 % |

Ces produits asphaltiques ont été étendus en tant que revêtement de sol dont on a mesuré la déformation au bout de 100 heures sous une pression de 0,4 bar.

On a également fabriqué à partir de ces produits des plaques de 5 mm d'épaisseur destinées au bardage insonorisant de façades métalliques. En service, ces éléments de bardage sont hautement exposés à la chaleur, surtout lorsqu'ils sont adjoints à des matériaux d'isolation thermique. Il est capital d'éviter au maximum le fluage de ces éléments en position verticale à température élevée, pour garantir l'intégrité du bardage. On a donc mesuré la température maximale de tenue à la verticale des plaques comme étant la température maximale où la plaque peut être maintenue verticale pendant 24 heures sans déformation.

Les résultats de mesures sont reportés dans le tableau 10 ci-dessous.

**TABLEAU 10**

| PROPRIETES | EX. 8 | EX. C2 |
|---|---|---|
| Température de fabrication | 180°C | 200°C |
| Déformation en 100 h sous 0,4 bar | 0,35 mm | 1,4 mm |
| Température maximale de tenue à la verticale d'une plaque de 5 mm d'épaisseur (24 h sans déformation) | 80°C | <30°C |

Les performances de l'asphalte chargé de caoutchouc selon l'invention sont excellentes. On notera que la valeur limite pour la déformation en 100 heures sous 0,4 bar pour un sol "acoustique" est de 0,5 mm, et que l'asphalte de l'exemple 8 se situe en-dessous de cette limite.

### Exemple 9

Dans cet exemple, on prépare un liant selon l'invention utilisé comme agent d'inertage de cendres d'incinération en mélangeant du bitume H 80/90 avec la cire de polyéthylène commercialisée par la Société IGI.

Ce liant est mélangé aux cendres d'incinération pour constituer une masse d'inertage contenant 45% en poids de liant, qui est coulée puis refroidie. Sur la masse refroidie, on effectue un test d'indentation selon la norme NFT 66-002 pour caractériser la dureté de la masse, qui ne doit pas se dégrader lors d'un stockage ultérieur.

Les résultats sont comparés avec ceux correspondant à une masse d'inertage préparée à partir du bitume H 80/90 seul et reportés dans le tableau 11.

**TABLEAU 11**

| Liant | | | Indentation en 1/10 mm | |
|---|---|---|---|---|
| Bitume H 80/90 | Cire PE | Température de coulée | à 25°C (Essai A norme NFT 66-002) | à 40°C (Essai B norme NFT 66-002) |
| 45% | sans | 260°C | 3,5 | 71 |
| 40% | 5% | 210°C | 1,5 | 20 |

La bonne coulabilité à une température réduite par la présence de la cire de polyéthylène facilite l'enrobage des particules de déchets.

La cire permet également de durcir la masse d'inertage, même à une température élevée de 40°C.

### Exemple 10

Dans cet exemple, on utilise un liant à base de bitume 40/50 MEXPHALT^{(R)} contenant selon l'invention la cire de polyéthylène de IGI, pour préparer un mastic d'enrochement.

Ce mastic contient 16% en poids de liant et 84% de fines et de sables et on compare ses propriétés à celles d'un mastic analogue ne contenant pas de cire.

Pour cela, on mesure la surface d'étalement naturel d'une masse de 500g coulée à 160°C, et le fluage du mastic appliqué sur une pente à 20% sur 20 mm d'épaisseur.

Le tableau 12 regroupe ces résultats ainsi que les températures normales de coulée pour chaque type de mastic.

**TABLEAU 12**

| Liant % poids du mastic | | Surface d'étalement à 160°C | Température normale de coulée | Fluage | |
|---|---|---|---|---|---|
| Bitume | Cire de polyéthylène | | | 24 h à 30°C | Puis 24h à 40°C |
| 16% | sans | 290 cm | 160°C | 0,3 mm | 3,0 mm |
| 14,4% | 1,6% | 350 cm | 130°C | 0,0 mm | 0,0 mm |

La présence de la cire de polyéthylène améliore considérablement la coulabilité du mastic d'enrochement et la stabilité du mastic coulé.

## Revendications

**1 -** Liant organique thermofusible pour produit asphaltique, ce liant étant à base de bitume naturel ou de bitume de l'industrie pétrolière, notamment de bitume pigmentable ou de liant clair, caractérisé en ce qu'il contient, outre ce produit de base, un additif constitué par une cire d'hydrocarbure dont le point de fusion, mesuré suivant les normes ASTM D 3945 et D 3418, est supérieur à 85°C.

**2 -** Liant selon la revendication 1, caractérisé en ce que le point de fusion de la cire est de l'ordre de 110 à 140°C.

**3 -** Liant selon la revendication 1 ou la revendication 2, caractérisé en ce que ladite cire est une cire de polyméthylène ou de polyoléfine, notamment de polyéthylène, de polypropylène ou de copolymère éthylène-propylène.

**4 -** Liant selon l'une quelconque des revendications 1 à 3, caractérisé en ce que ladite cire a une pénétration, mesurée à 23°C suivant la norme ASTM D1321, inférieure à 15/10 mm.

**5 -** Liant selon l'une quelconque des revendications 1 à 4, caractérisé en ce que ladite cire précipite dans ledit liant à une température inférieure à son point de fusion.

**6 -** Liant selon l'une quelconque des revendications 1 à 5, caractérisé en ce qu'il contient en outre un élastomère, notamment un copolymère de styrène-butadiène, de styrène-butadiène-styrène ou de styrène-isoprène-styrène.

**7 -** Liant selon l'une quelconque des revendications 1 à 6, caractérisé en ce qu'il contient de 2% à 20% environ en poids, notament de 4,5% à 11,5% environ en poids, de ladite cire.

**8 -** Procédé de préparation d'un liant organique thermofusible pour produit asphaltique, selon l'une quelconque des revendications 1 à 7, dans lequel on ajoute à du bitume naturel ou à du bitume de l'industrie pétrolière ladite cire d'hydrocarbure.

**9 -** Produit asphaltique coulable à chaud et durcissant par simple refroidissement, caractérisé en ce qu'il contient un liant selon l'une quelconque des revendications 1 à 7 et des charges minérales, notamment des fines et éventuellement du sable et éventuellement des gravillons, ou bien des charges non minérales, comme notamment des grains de liège ou des granulats de caoutchouc, naturel ou non, neuf ou de récupération.

**10 -** Produit asphaltique selon la revendication 9, caractérisé en ce qu'il contient de l'asphalte de récupération.

**11 -** Utilisation d'un produit asphaltique selon la revendication 9 ou 10 pour la réalisation de revêtements d'étanchéité, de voirie, de sols sportifs ou industriels.

**12 -** Utilisation selon la revendication 11 pour étancher des galeries de mines de stockage de déchets, notamment de déchets radioactifs.

**13 -** Utilisation d'un produit asphaltique selon la revendication 9 ou 10 pour stabiliser des enrochements, notamment sur des berges.

**14 -** Produit asphaltique coulable à chaud et durcissant par simple refroidissement, caractérisé en ce qu'il contient un liant selon l'une quelconque des revendications 1 à 7 et des charges non minérales, notamment des grains de liège ou de granulés de caoutchouc.

**15 -** Utilisation d'un produit asphaltique selon la revendication 14 pour la réalisation de sols atténuant la transmission sonore.

**16 -** Utilisation d'un produit asphaltique selon l'une des revendications 9, 10, 11 et 14 comme matériau de scellement.

**17 -** Plaque constituée d'un produit asphaltique selon l'une des revendications 10, 11 et 14 incorporable dans des éléments de façade en position verticale, permettant d'atténuer la transmission sonore.

**18 -** Utilisation d'un liant selon l'une quelconque des revendications 1 à 7 pour enrober des déchets ultimes de l'industrie au cours d'un processus d'inertage desdits déchets.
